# EUROPEAN PATENT SPECIFICATION

(11) **EP 0 536 412 B1**
(45) Date of publication and mention of the grant of the patent: **21.06.1995**
(21) Application number: 92908260.0
(22) Date of filing: 20.04.1992
(51) Int. Cl.: B21D 37/04, B21D 28/36

(54) **METHOD OF CHANGING TOOLS IN PUNCH PRESS MACHINE**
VERFAHREN ZUM WECHSELN VON WERKZEUGEN IN EINER STANZMASCHINE
PROCEDE DE CHANGEMENT D'OUTILS DANS UNE MACHINE A POINCONNER

(30) Priority: 26.04.1991 JP 125150/91
(43) Date of publication of application: 14.04.1993
(73) Proprietor: FANUC LTD., Minamitsuru-gun, Yamanashi 401-05 (JP)
(72) Inventor: MIYAJIMA, K., Room 7-106, Fanuc Manshonharimomi, Minamitsuru-gun, Yamanashi 401-05 (JP)
(74) Representative: Billington, Lawrence Emlyn
(86) International application number: JP9200507
(87) International publication number: WO9219397

(56) References cited:
- EP-A- 0 215 644
- EP-A- 0 396 876
- FR-A- 602 514
- FR-A- 1 433 859
- GB-A- 2 221 639
- JP-A-60 006 226
- JP-A-61 212 434
- US-A- 3 448 645

## Description

The present invention relates to a tool change method for a punch press machine, in which a punch tool stored in a tool holder of a magazine is selected and changed, and more particularly, to a tool change method for a punch press machine designed to prevent the influence of backlash caused by punch tool changing operation.

### Background Art

The punch press machines have been improved in various respects for higher operating efficiency and greater versatility. Among such known improved punch press machines, there is one provided with a magazine keeping a plurality of punch tools for selective use in one machine. Usually, these punch tools are controlled by means of a uniaxial control shaft. In replacing a punch tool with another one of a different type, the control shaft is returned once to a machine origin, where the punch tool having so far been used is removed. Then, the punch tool assigned next is selected to be connected to the control shaft returned to the machine origin.

The rotation of the control shaft is transmitted through gears in engagement. Thus, when the control shaft returns to the machine origin in the aforesaid manner, the gears are inevitably subjected to backlash in dependence on their rotating directions. Thus, it has been impossible for a punch tool to be replaced without being influenced by the backlash. More specifically, rotating and returning the punch tool to the position of the machine origin so that the tool is stored in a tool holder after the machining by that tool is completed, the tool cannot be stored in the holder if the rotational position of the tool fails to be accurately aligned with the machine origin position due to the influence of the backlash. Thus, in order to eliminate the influence of the backlash, the backlash has to be corrected every time the punch tool is changed.

### Disclosure of the Invention

The object of the present invention is to provide a tool change method for a punch press machine, in which punch tools can be replaced without being influenced by backlash.

In order to achieve the above object, according to an aspect of the present invention, there is provided a tool change method for a punch press machine, in which a punch tool stored in a tool holder of a magazine is selected and replaced. In returning a control shaft of the punch tool to a machine origin, in order to change the punch tool, the control shaft is always rotated only in the predetermined rotating direction. Another punch tool selected next is connected to the control shaft returned to the machine origin by the aforesaid rotation, whereupon the punch tool replacement is accomplished.

Preferably, the rotating direction of the control shaft is set in a memory unit by means of a parameter.

Further preferably, the rotation of the control shaft is controlled by means of an output of a servomotor with the aid of gear transmission means.

Further preferably, the control shaft is uniaxial, and a plurality of punch tools are alternatively controlled by means of the uniaxial control shaft.

According to another aspect of the present invention, moreover, there is provided a tool change method for a punch press machine controlled by means of a numerical control device. The numerical control device judges whether or not a tool replacement command has been issued to a read work program. If it is concluded that the tool replacement command has been issued, it is then judged whether or not a punch tool before replacement has been controlled so as to be rotated by means of a control shaft. If it is concluded that the control shaft has been controlled, the control shaft is rotated in a predetermined rotating direction previously parameter-set in a memory unit of the numerical control device, whereby the control shaft is returned to a machine origin for punch tool replacement.

According to the present invention, as described above, the control shaft of the punch tool is always rotated only in the predetermined rotating direction to be returned to the machine origin, in order to replace the punch tool. The punch tool replacement is accomplished by connecting the punch tool selected next to the control shaft returned to the machine origin. Since the control shaft rotates only in the predetermined direction, at this time, gears always rotate in the same direction for the punch tool replacement. When the control shaft is returned to the machine origin, therefore, the gears always engage in the same state, so that the direction of backlash never changes. Thus, the influence of the backlash can be kept constant with every punch tool replacement, so that the influence of the backlash, in this case, can be removed practically.

### Brief Description of the Drawings

Fig. 1 is a flow chart for carrying out a tool changing method for a punch press machine according to the present invention;
Fig. 2 is a diagram for illustrating the tool changing method for a punch press machine according to the present invention;
Fig. 3 is a diagram for illustrating C shaft operations, in which Fig. 3(A) illustrates a conventional operation, and Fig. 3(B) is a process flow chart of a metering stage in an embodiment illustrating an operation according to the present invention; and
Fig. 4 is a block diagram of the hardware of a numerical control device (CNC) for carrying out the present invention.

### Best Mode of Carrying Out the Invention

One embodiment of the present invention will now be described with reference to the drawings.

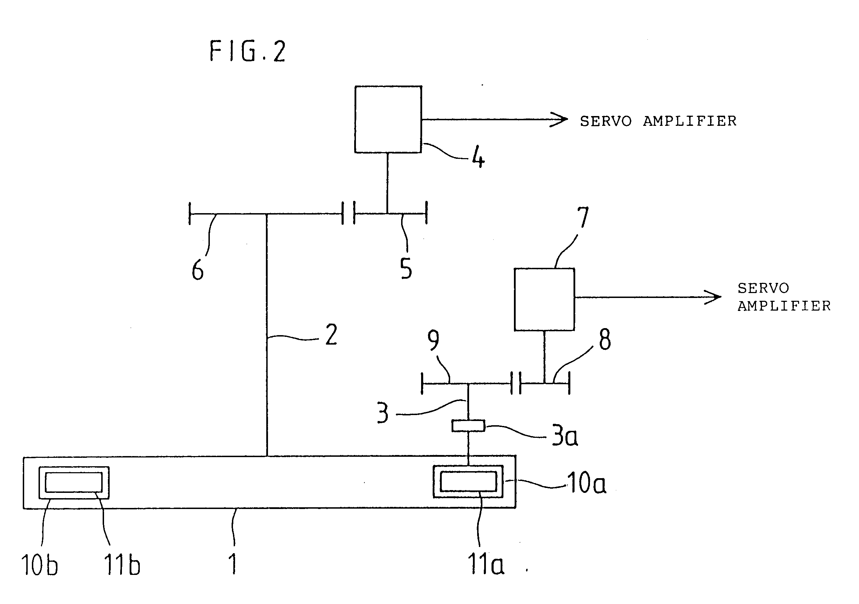

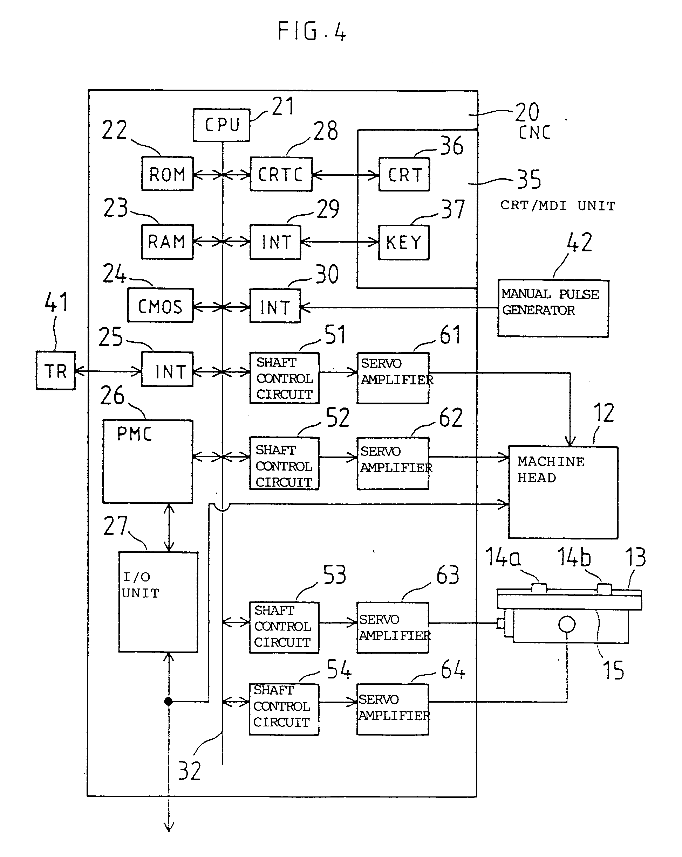

Referring to Fig. 2, a punch press machine comprises magazine 1, which is rotated by means of a T shaft 2. The magazine 1 is provided with a plurality of tool holders 10a, 10b, · · ·, in which punch tools 11a, 11b, · · · are arranged respectively. The rotation of the T shaft 2 is controlled by a servomotor 4 for T shaft rotation through the gears 5 and 6. The rotation of a C shaft, as a tool control shaft, is controlled by a servomotor 7 for C shaft rotation through the gears 8 and 9. As mentioned later, these servomotors 4 and 7 are connected to servo amplifiers 61 and 62 (Fig. 4), respectively. A clutch 3a is provided between the C shaft 3 and the punch tool 10a, and the punch tool 10a is disengaged from the C shaft 3 by means of the clutch 3a when changing the tool.

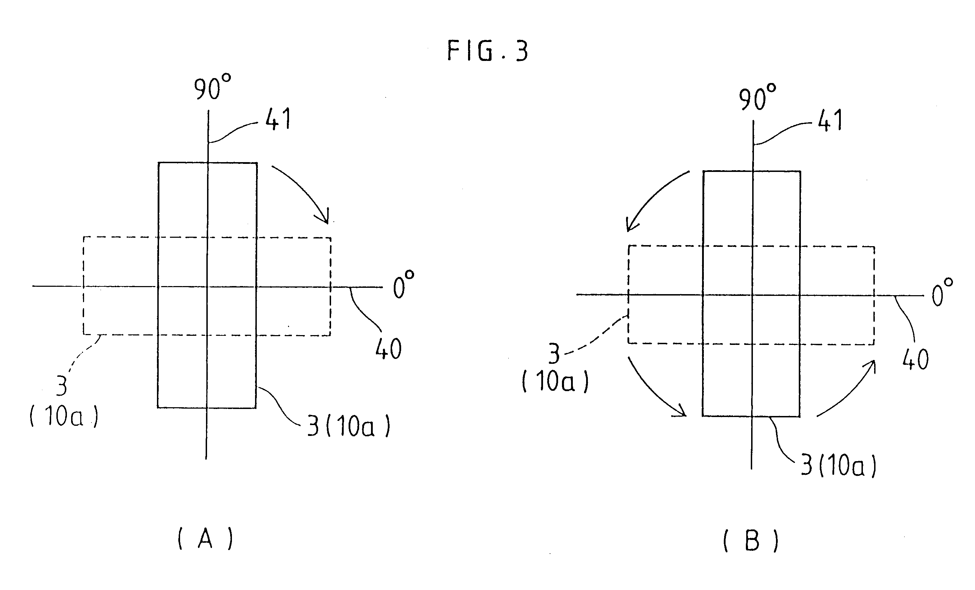

Referring now to Fig. 3, the operation of the C shaft 3 will be described. Fig. 3(A) shows the operation of a conventional C shaft, whereas Fig. 3(B) the operation of the C shaft 3 according to the present invention. In Fig. 3, the C shaft 3 is represented by a head portion of the punch tool 10a.

In returning the tool from a current rotational position 41 (90° position in the case of Fig. 3) to a machine origin 40 (0° position), the conventional C shaft 3 is selectively rotated in the direction of a smaller rotational angle. In other words, the tool is returned to the origin through a shorter way. In the case of Fig. 3(A), for example, the tool in the current position can reach the machine origin by being rotated for 90° in the direction indicated by the arrow. In the opposite direction, however, the tool must be rotated for 270° to reach the machine origin. Thus, the rotating direction in which the tool can return to the origin by being rotated for 90° is selected. Conventionally, therefore, the direction (clockwise or counterclockwise), in which for the tool to return to the origin is determined in accordance with the current position (angle) of the tool. Accordingly, the rotating directions of the gears for tool change are not always identical, so that the condition of the backlash of the gears at the point of time when the C shaft 3 is returned to the machine origin 40 is not fixed.

As shown in Fig. 3(B), in contrast with this, the present invention is characterized by that the C shaft is controlled so as to always rotate in the same direction (counterclockwise direction in the case of Fig. 3(B)) when it is to be returned to the machine origin 40. In this arrangement, the gears 8 and 9 on the C shaft 3 also rotate in fixed directions only, so that they always engage in the same state when the C shaft 3 is returned to and stopped at the machine origin 40. In the case of the present invention, therefore, the backlash of the gears is constant, and can always be kept in its initial direction. Accordingly, there is no possibility that the condition of backlash varies each time the punch tool is changed, thereby dispensing with any special measure for preventing its influence.

Fig. 4 is a block diagram of the hardware of a numerical control device for carrying out a method according to the present invention. In this drawing, numeral 20 denotes the computer numerical control device (CNC), and the CNC is generally controlled by means of a central processing unit (CPU) 21. The CPU 21 is connected to a read-only memory (ROM) 22, a random access memory (RAM) 23, a CMOS 24, an interface 25 for external equipment, a programmable machine controller (PMC) 26, an input/output unit (I/O unit) 27, a graphic control circuit 28, an interface 29 for the connection of a keyboard 37, an interface 30 for the connection of a manual pulse generator 42, and axis control circuits 51 to 54 through a bus 32.

The ROM 22 is loaded with a system program for executing the general control of the CNC. The RAM 23, which is composed of an SRAM or the like, is loaded with temporary calculation data, display data, etc. The CMOS 24 is a nonvolatile memory backed up by a battery (not shown). Data stored in the CMOS 24 are kept entire even when the CNC 20 is cut off from the power supply. The CMOS 24 is loaded with parameter-set data for setting the rotating direction of the C shaft 3, as well as T codes, pitch error correction values, work program, etc.

The interface 25 for external equipment is connected to an external apparatus 41 such a paper tape reader or paper tape puncher. The work program is read by means of the paper tape reader. Further, the work program edited by means of the CNC 20 can be delivered to the paper tape puncher.

The PMC 26 controls the machine by means of a sequence program prepared in a ladder format. More specifically, the work program is converted into a signal, which is essential to the machine side by means of the sequence program in accordance with an M function (auxiliary function of NC machine tool), T function (indication of the tool number used), etc. assigned according to the work program, and is delivered to the machine via the I/O unit 27. In response to these output signals, an electromagnetic relay and the like on the side of the machine are driven, and, in addition, a hydraulic valve, pneumatic valve, electric actuator, punch head, etc. are driven. Further, the PMC 26 receives signals from limit switches on the side of the machine, switches of a machine control panel, etc., and delivers these signals to the CPU 21.

The graphic control circuit 28 converts digital data such as those of the current positions of various axes, alarms, parameters, image data, etc., into image signals, and outputs them. These image data are delivered to a display unit (CRT) 36 of a manual input device with display unit (CRT/MDI) 35, and are displayed thereon. Data inputted through a keyboard 37 of the CRT/MDI 35 are delivered to the CPU 21 via the interface 29.

The manual pulse generator 42, which is connected to the interface 30, is packaged on the machine control panel, and is used for accurate manual positioning of operating components of the machine.

The axis control circuits 51 to 54 receive movement commands for the individual axes from the CPU 21, and deliver them to the servo amplifiers 61 to 64, respectively. The servo amplifier 61, among the other ones, is connected to the axis control circuit 51, and drives the servomotor 4 (Fig. 2) for the T shaft 2 for controlling the rotation of the magazine 1 (Fig. 2). The magazine 1, along with the tool holders 10a, 10b, · · · and the punch tools 11a, 11b, · · ·, are included in a machine head 12. On the other hand, the servo amplifier 62 is connected to the axis control circuit 52, and drives the C shaft 3 for controlling the rotation of the punch tools 11a, 11b, · · ·. Further, the servo amplifiers 63 and 64 drive X- and Y-axis servomotors (not shown) for controlling a table 15. A workpiece 13 is fixed on the table 15 by means of workpiece holders 14a and 14b.

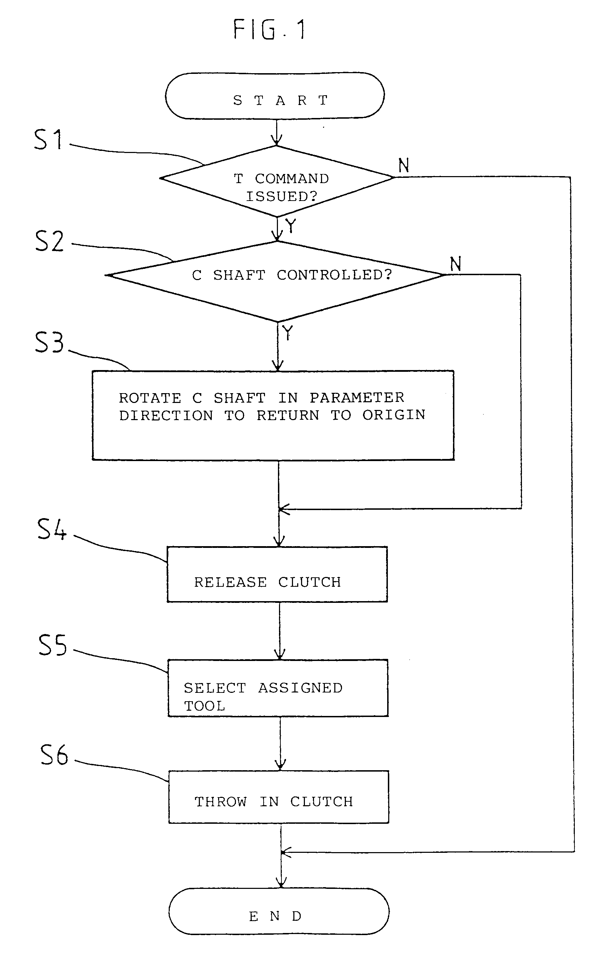

Referring to the flow chart of Fig. 1, processes of the tool changing method according to the present invention, executed by means of the CPU 21 of the CNC 20, will be described.

First, in response to a start command, the CPU 21 reads the work program, previously read and stored in the CMOS 24, and determines whether or not a tool change command (T command) has been issued to the work program (Step S1). If it is concluded that the T command has not been issued, the present program will be finished, whereas if it is concluded that the T command has been issued, it is then determined whether the C shaft has previously been controlled or not (Step S2). More specifically, it is determined whether or not a tool before the tool replacement has been controlled so as to be rotated from the machine origin position by means of the C shaft. If it is concluded that the C shaft has not been controlled, the clutch 3a is released, and the punch tool having so far been used is housed in a punch holder (Step S4). Then, the servomotor 4 is driven; the magazine 1 is positioned so that the tool assigned in accordance with the T command is located in a tool change position (Step S5); and the clutch is thrown in (Step S6) to connect the assigned tool to the C shaft 3, whereupon the tool change is finished. Whereas, if it is concluded that the C shaft has been controlled, the C shaft is rotated in the rotating direction, which has been previously set and stored in the CMOS 24 by a parameter, in order to be returned to the machine origin, and the process of Step S4 and its subsequent processes are executed.

## Claims

1. A tool change method for a punch press machine, wherein a punch tool (11a,11b) stored in a tool holder (10a,10b) of a magazine is selectively changed,
comprising a step of rotating a control shaft (3) of the punch tool (11a,11b) in a predetermined rotating direction in order to avoid the influence of the backlash to return the control shaft (3) to a machine origin (40) for changing the punch tool (11a,11b), and connecting another punch tool (11a,11b) selected next to the control shaft (3) returned to the machine origin (40) by said rotation, thereby accomplishing the punch tool change.

2. A tool change method for a punch press machine according to claim 1, wherein the rotating direction of said control shaft (3) is set by means of a parameter and stored in a memory unit.

3. A tool change method for a punch press machine according to claim 1 or 2, wherein the rotation of said control shaft (3) is controlled by means of a servomotor (7) with the aid of gear transmission means (8,9).

4. A tool change method for a punch press machine according to claim 1 or 2, wherein said control shaft (3) is of uniaxial type, and a plurality of punch tools (11a,11b) can selectively be controlled by means of said uniaxial control shaft (3).

5. A tool change method for a punch press machine controlled by a numerical control device, wherein said numerical control device judges whether or not a tool change command has been issued to a read work program, then judges whether or not a control shaft (3) of a punch tool (11a,11b) has been controlled so as to be rotated from an origin position (40); if it is concluded that the control shaft (3) has been controlled, the control shaft (3) is made to rotate in a preset rotating direction in order to avoid the influence of the backlash in accordance with parameter-set data previously stored in a memory unit of the numerical control device, and the control shaft (3) is returned to the machine origin (40) for change of punch tool (11a,11b).

## Patentansprüche

1. Verfahren zum Wechseln von Werkzeugen für eine Stanzmaschine, bei dem ein Stanzwerkzeug (11a, 11b), das in einem Werkzeughalter (10a, 10b) eines Magazins aufbewahrt ist, selektiv ausgewechselt wird, welches Verfahren einen Schritt umfaßt
zum Drehen einer Steuerwelle (3) für das Stanzwerkzeug (11a, 11b) in einer vorbestimmten Drehrichtung, um den Einfluß eines Totgangs zu vermeiden, zum Rückführen der Steuerwelle (3) zu einem Maschinen-Nullpunkt (40) zum Zwecke des Wechselns des Stanzwerkzeugs (11a, 11b) und
zum Verbinden eines anderen Stanzwerkzeugs (11a, 11b), das als nächstes ausgewählt ist, mit der Steuerwelle (3), die zu dem Maschinen-Nullpunkt (40) durch die Drehung rückgeführt ist, um dadurch den Stanzwerkzeug-Wechsel zu vollenden.

2. Verfahren zum Wechseln von Werkzeugen für eine Stanzmaschine nach Anspruch 1, bei dem die Drehrichtung der Steuerwelle (3) mittels eines Parameters eingestellt und in einer Speichereinheit gespeichert wird.

3. Verfahren zum Wechseln von Werkzeugen für eine Stanzmaschine nach Anspruch 1 oder 2, bei dem die Drehung der Steuerwelle (3) mittels eines Servomotors (7) mit Hilfe eines Zahnradgetriebes (8, 9) gesteuert wird.

4. Verfahren zum Wechseln von Werkzeugen für eine Stanzmaschine nach Anspruch 1 oder 2, bei dem die Steuerwelle (3) vom uniaxialen Typ ist und eine Vielzahl von Stanzwerkzeugen (11a, 11b) selektiv mittels der uniaxialen Steuerwelle (3) gesteuert werden.

5. Verfahren zum Wechseln von Werkzeugen für eine Stanzmaschine, die durch eine numerische Steuereinrichtung gesteuert wird, bei dem die numerische Steuereinrichtung entscheidet, ob ein Werkzeugwechselbefehl an ein ausgelesenes Arbeitsprogramm ausgegeben oder nicht ausgegeben worden ist, dann entscheidet, ob eine Steuerwelle (3) für ein Stanzwerkzeug (11a, 11b) derart, daß sie von einer Nullpunkt-Stellung (40) aus gedreht wird, gesteuert worden ist oder nicht gesteuert worden ist, falls geschlossen wird, daß die Steuerwelle (3) gesteuert worden ist, die Steuerwelle (3) veranlaßt wird, in einer voreingestellten Drehrichtung, um den Einfluß eines Totgangs zu vermeiden, in Übereinstimmung mit parametereingestellten Daten, die zuvor in einer Speichereinheit der numerischen Steuereinrichtung gespeichert sind, zu drehen, und die Steuerwelle (3) zu dem Maschinen-Nullpunkt (40) zum Wechseln des Stanzwerkzeugs (11a, 11b) rückgeführt wird.

## Revendications

1. Procédé de changement d'outil pour une machine à poinçonner, dans lequel on change sélectivement un outil de poinçonnage (11a, 11b) disposé dans un logement d'outil (10a, 10b) d'un magasin,
comprenant une étape consistant à faire tourner un arbre de commande (3) de l'outil de poinçonnage (11a, 11b) dans une direction de rotation prédéterminée dans le but d'éviter l'influence du jeu pour renvoyer l'arbre de commande (3) au début de l'usinage (40) pour changer l'outil de poinçonnage (11a, 11b) et relier un autre outil de poinçonnage (11a, 11b) sélectionné à côté de l'arbre de commande (3) renvoyé au début de l'usinage (40) par ladite rotation, en réalisant ainsi le changement d'outil de poinçonnage.

2. Procédé de changement d'outil pour une machine à poinçonner selon la revendication 1, dans lequel on règle le sens de rotation dudit arbre de commande (3) au moyen de paramètres mémorisés dans une unité à mémoire.

3. Procédé de changement d'outil pour une machine à poinçonner selon la revendication 1 ou 2, dans lequel la rotation dudit arbre de commande (3) est commandée au moyen d'un servomoteur (7) à l'aide d'un moyen (8, 9) de transmission à engrenage.

4. Procédé de changement d'outil pour une machine à poinçonner selon la revendication 1 ou 2, dans lequel ledit arbre de commande (3) est de type uniaxial et on peut sélectivement commander plusieurs outils de poinçonnage (11a, 11b) au moyen dudit arbre de commande uniaxial (3).

5. Procédé de changement d'outil pour une machine à poinçonner commandée par un dispositif à commande numérique, dans lequel ledit dispositif à commande numérique évalue le fait de savoir si oui ou non une commande de changement d'outil a été envoyée à un programme de travail par lecture, puis évalue le fait de savoir si oui ou non un arbre de commande (3) d'un outil de poinçonnage (11a, 11b) a été commandé pour effectuer des rotations à partir d'une position initiale (40); si la conclusion est telle que l'arbre de commande (3) a été commandé, on fait en sorte que l'arbre de commande (3) tourne dans une direction de rotation préréglée dans le but d'éviter l'influence du jeu conformément à des données installées sous forme de paramètres préalablement mémorisés dans une unité à mémoire du dispositif à commande numérique, et l'arbre de commande (3) est renvoyé au début de l'usinage (40) pour changer un outil de poinçonnage (11a, 11b).
